# EUROPEAN PATENT APPLICATION

(11) **EP 1 314 476 A1**
(43) Date of publication of application: **28.05.2003**
(21) Application number: 01204535.7
(22) Date of filing: 26.11.2001
(51) Int. Cl.: B01J 29/65, B01J 29/67, B01D 53/86

(54) **Zeolite catalysts and their use in selective catalytic reduction of NOx**

(71) Applicant: Technische Universiteit Delft, 2628 BL Delft (NL)
(72) Inventor: Seijger, Germaine,Bertine,Frédérique, 2512 BR Den Haag (NL); Van den Bleek, Cornelis, Maria, 2631 PW Nootdorp (NL); Calis, Hans Peter Alexander, 2631 TG Nootdorp (NL)
(74) Representative: Prins, Adrianus Willem

(57) **Abstract**

The invention is directed to catalyst compositions comprising a zeolite, as well as to processes for the reduction of nitrogen oxides (NOx) employing these catalyst compositions.

The catalyst compositions of the invention comprise a zeolite of the ferrierite type (FER), which zeolite is ion exchanged with Ce, in particular Ce-H-FER and are very active in the selective catalytic reduction of NOx, even if this reaction is carried out in the presence of water and sulfur compounds.

## Description

The present invention is directed to catalyst compositions comprising a zeolite, as well as to processes for the reduction of nitrogen oxides (NOx) employing these catalyst compositions.

Metal exchanged zeolites are generally regarded as promising catalysts for the reduction of NOx. Numerous specific combinations of zeolite type and exchanged metal have been investigated for their applicability in the removal of NOx by selective catalytic reduction (SCR). In the SCR process, the NOx containing gas is contacted with the zeolite catalyst at a suitable temperature in the presence of a reducing agent, in order to reduce the NOx to harmless nitrogen.

There remains, however, a need for still more active catalysts, in particular SCR catalysts which may be used for the reduction of NOx from oxygen rich gases, such as the effluents of lean burn engines. Another important aspect is that these catalysts should retain there activity in the presence of water, which is under most practical conditions inevitably present in the NOx containing gas. The presence of water is reported to decrease the activity of zeolite catalysts, in particular at higher temperatures. This also holds for sulfur compounds, which usually are also present in NOx containing gases under practical conditions.

It is an object of the present invention to provide a catalyst composition which may be employed in the SCR of NOx. A further object is to provide such a catalyst, which may be employed in the SCR of NOx from gases comprising a relative large amount of oxygen, *viz.* 2 vol.% oxygen or more. Furthermore, the catalyst composition should be able to reduce the NOx in a large temperature window and/or at relatively low temperatures. Also the effect of the presence of water and/or sulfur compounds in the NOx containing gas mixture on the catalyst's activity should be minimal.

Surprisingly, it has been found that these and other objectives can be met by a catalyst composition comprising a specific zeolite type, which is exchanged with a specific type of metal ion. Therefore, in a first aspect, the present invention relates to a catalyst composition comprising a zeolite having the FER framework topology, which zeolite is ion exchanged with Ce.

Instead of, or in addition to cerium, other rare earth metals may be ion exchanged into the FER-type zeolite according to the present invention as well.

Zeolites of the FER topology, which are used according to the present invention, are known zeolites, which may be of either synthetic or natural origin. Materials which belong to the group having the isotypic framework structures of the FER topology are *e.g.* ferrierite, monoclinic ferrierite, siliceous ferrierite, ZSM-35, ISI-6 and Sr-D, and others. As used herein, the abbreviation "FER" refers to the materials having the FER topology, whereas "ferrierite" (sometimes abbreviated as "fer" or "Fer") refers to the synthetic or natural occurring zeolite. Synthetic ferrierite is sometimes also referred to as ZSM-35.

Like other zeolites, a zeolite of the FER-type is a crystalline material, the framework of which may be visualized as being built up from interconnected SiO₄ and AlO₄- tetraeders. It may be represented by the general formula M_{*x*}/_{*n*}[Al_{*x*}Si₃₆_{*-x*}O₇₂], wherein M represents a positive ion with a valence of +*n*, the charge of which ion compensates for the negative charge resulting from the Al in the framework; and *x* is an integer, which reflects the Si/Al ratio. According to the invention *x* is larger than zero. Preferably, 0.35 < *x* < 6, corresponding to a Si/Al ratio of about 5-100 (SiO₂/Al₂O₃ ratios of 10-200).

Synthetic FER-type materials as synthesized generally contain Na⁺, K⁺, H⁺ or NH₄⁺ as a compensating cation.

According to the present invention, the zeolite of the FER-type is ion exchanged with the desired metal ion. Ion exchange processes of zeolites are known *per se.* The ion exchange process comprises the contacting of a suitable form of the zeolite with a solution of the ion to be exchanged, upon which under suitable conditions (such as temperature and concentration), ions present in the zeolite framework (such as H⁺, ammonium, sodium, or calcium ions), are exchanged for the ion from the solution. The degree of exchange can be controlled by choosing the conditions in the ion exchange process, in particular by choosing the exchange time, ion concentration of the solution, temperature and/or number of subsequent exchange steps.

The degree of exchange is expressed as the amount of metal from the solution that replaces the cationic species originally present in the framework. For example, if a H(100)-FER is taken as a starting material (*i*.*e*., a material wherein each negative charge resulting from the presence of an alumina species in the FER framework is compensated by one H⁺ species), 100% exchange with *e.g.* Ce³⁺ refers to the process wherein per 3 mol H⁺, 1 mol Ce³⁺ is exchanged. Thus the material Ce(100)-FER is obtained. The amount of exchange of the exchanged zeolite may for example be assessed by ICP/AAS (Inductively Coupled Plasma/Atomic Absorption Spectrometry) analysis, wherein the Al and Ce contents are determined by ICP and the Si content is determined by AAS. From this the degree of exchange may be calculated. It is noted that with FER type zeolites, as with other zeolites, it is also possible to "over-exchange" the zeolite. Using *e.g.* NH₄⁺(100)-FER as a starting material, exchange levels of Ce of up to 260% or more may be obtained. It is noted, however, that the exact nature of the over-exchanged Ce (*i.e*., its valence or oxidation state) in the zeolite framework is not precisely known.

The ion exchange process may for example be carried out by providing an aqueous solution of a salt of the metal to be exchanged, *e.g.* the nitrate or acetate salt. Preferred concentrations range from 0.01 to 1 M. This solution is then contacted with the FER-type zeolite, which may *e.g.* be in powder or pelletized form, preferably at elevated temperatures of 60-99°C, more preferably from 90-98°C. After the exchange is completed to the desired level, the exchanged FER-type zeolite is separated from the solution, *e.g.* by means of filtration, and subsequently dried. After it is dried, the exchanged zeolite may be subjected to a calcination step, which comprises a treatment at elevated temperature of about 500 to 600°C. Proton type zeolites (*e.g*. H-FER) may be obtained by starting from a degradable cationic form, *e.g.* NH₄⁺-FER. Upon calcination, the NH₄⁺ cations will degrade and form H⁺, thus providing the H-form. Zeolites having different types of cations in the framework, *e.g.* Ce-H-FER, may be obtained either by starting the exchange from the H-form or from the NH₄⁺-form. In both cases after calcination the Ce-H-form will be obtained.

It is also possible to prepare the exchanged FER-type zeolite by means of a solid state ion exchange technique. To this end, the FER-type zeolite and the salt are mixed in dry form. Subsequently the mixture is heated to a temperature of typically 600°C or higher to obtain the exchanged FER-type zeolite.

Instead of using FER-type zeolite in powder, or optionally in pelletized form, as a starting material for the exchange process, it is also possible to use a zeolite that has been prepared *in situ* on a substrate, such as a monolith, *e.g.* using the methods described in WO-A-94/09902 and WO-A-98/06495. According to these methods, zeolite coatings are prepared by contacting a substrate surface, which may be *e.g.* a metallic or ceramic monolith, with a solution comprising the ingredients for FER-type zeolites. Subsequently, the crystallization of the FER-type zeolite is carried out *in situ,* by subjecting the solution and the substrate to crystallization conditions, upon which the zeolitic coating is formed. The zeolite of the FER-type, which is comprised in this coating may then be subjected to the ion exchange process as explained hereinabove.

The exchanged FER-type zeolite, obtained according to the present invention, has a remarkable activity in the SCR of NOx in the presence of oxygen, as will become apparent from the Examples below. This high activity is also observed in the presence of water, which is even more surprising in view of earlier reports on the negative effect of water vapor on the stability of zeolite catalysts. Under "real" conditions, *e.g.* using a diesel engine off-gas, which usually contains sulfur compounds and water, a high catalyst activity is maintained for a prolonged period.

It is noted that Akaratiwa *et al.* (Topics in Catalysis, 16/17, Nos. 1-4, (2001) 209-216) describe the use of a double wash-coating of platinum and zeolite catalysts in the SCR of NOx by hydrocarbons. One of the composite catalyst systems mentioned in this publication contains Ce-FER which is obtained by impregnation, which is described in this publication as a simple easy preparation method, as opposed to the exchange method used in the present invention. Furthermore, the catalytic testing in this publication is carried out in the absence of water and sulfur compounds. One of the conclusions in this publication is that the Ce-FER used in the composite materials is not as good as the performance of FER-type zeolite exchanged with other metals.

In a further embodiment, the present invention is directed to a process for the reduction of NOx from a stream further comprising oxygen, comprising a step wherein said stream is contacted in the presence of a reducing agent with a FER zeolite based catalyst composition, as described herein.

NOx containing gases, which may be treated in accordance with the present invention are for example off-gases of industrial plants, such as off-gases from production facilities for nitric acid or adipic acid, or off-gases of combustion units. Also off-gases from gas turbines, heating plants, or other stationary plants. In particular off-gases from internal combustion engines may be treated.

In case of treatment of off-gases from internal combustion engines, the present invention may be employed with particular advantage for the SCR treatment of off-gases from lean burn engines, in particular for lean burn diesel and gasoline direct injection engines. Lean burn engines are characterized by combustion of fuel in an excess of air, resulting in an off-gas comprising a substantial amount of oxygen, *e.g.* more than 2 vol.%, in particular more than 5 vol.%, more particularly more than 10 vol.% and typically between 5 and 20 vol.% oxygen.

The reducing agent may already be present in the gas to be treated, as may for example be the case in the treatment of off-gases from combustion engines. Alternatively, the reducing agent can be added as a separate stream to the gas stream. Suitable reducing agents for the SCR of NOx are known in the art. Preferably, the reducing agent is selected from an organic compound, ammonia and/or urea. Other suitable reducing agents are CO and H₂. Preferred organic compounds for use as a reducing agent are hydrocarbons, optionally substituted with one or more oxygen comprising groups. Preferred hydrocarbons in this respect are alkenes, more preferably a C₂-C₂₀ alkenes, most preferably propene. Other suitable hydrocarbons are gases or liquids selected from saturated hydrocarbons, ethylenic hydrocarbons, acetylenic hydrocarbons, aromatic hydrocarbons and petrochemical fractions, such as methane, ethane, propane, butane, pentane, hexane, acetylene, butadiene, benzene, toluene, xylene, kerosene, diesel fuel or gasoline.

Oxygenated hydrocarbons that may be used as reducing agents comprise alcohols, such as saturated alcohols like methanol, ethanol or propanol; ethers, such as methyl ethers, ethyl ethers; or esters like methyl acetate; and ketones.

It is also possible to apply the catalysts of the invention in processes for the removal of NOx without the application of a reducing agent.

In a preferred embodiment, the catalyst composition used according to the present invention comprises *e.g.* Ce-H-FER, *viz*. a proton type FER, wherein only part of the H⁺ has been exchanged for the rare earth metal ion, *i.c.* Ce.

The metal ion exchange level of the FER zeolite as used in the catalyst composition according to the present invention is preferably from 15-98%, more preferably from 60-95%.

It was furthermore found, that the activity of the catalyst compositions according to present invention can be increased even more by providing a physical mixture of the metal exchanged FER zeolite described above and a metal oxide. The increase of activity, which is obtained according to this embodiment is particularly remarkable at lower temperatures, such as at temperatures from 100-250°C. Preferred metal oxides for improving the activity further, comprise rare earth metal oxides, even more preferred is cerium oxide.

The catalyst composition may be present according to the invention in any conventional means known to the skilled person, such as on the surface of a monolith or as pellets present in a packed bed. For automotive application, the catalyst may be mounted in conventional ways in the exhaust gas system of the car.

In another preferred embodiment, a catalytic system is used that is based on a combination of the above-mentioned zeolite of the ferrierite type (FER), which is ion exchanged with Ce and a zeolite exchanged with platinum. This combination may be in the form of a physical mixture which is present in one bed. Alternatively, this embodiment may be carried out in two or more separate catalyst beds, wherein the first bed comprises a catalyst composition with the exchanged FER zeolite described above, and wherein the second bed comprises a Pt exchanged zeolite. The beds used in this embodiments may also be in the form of a monolith. According to this embodiment the activity for NOx reduction can be increased, in particular in the temperature range of 150-250°C or lower, thus widening the temperature window in which the compositions of the present invention show catalytic activity. Since the Pt exchanged zeolite may act as an oxidation catalyst, oxidizing the hydrocarbons, particularly at higher temperatures, it is preferred to provide the Pt exchanged zeolite in a bed which is kept at a low temperature, preferably lower than 180°C, more preferably lower than 150°C. The Pt exchanged zeolite may be of the FER type. Other zeolite types, such as ZSM-5 or beta may also be used for this purpose.

Preferred temperatures for carrying out the processes according to the invention range from 100-500°C, more preferably from 150-450°C.

Typical values for the gas hourly space velocity (GHSV) at which the process of the invention is carried out, range from 20 000-200 000 h⁻¹, preferably from 30 000-100 000 h⁻¹, most preferably about 40 000-80 000 h⁻¹; the value of the GHSV being calculated as {volumetric flowrate of the gas in m³/h(at T=0°C and atmospheric pressure) / (volume of catalyst bed in m³)}.

The following examples illustrate the present invention.

### Examples

### Zeolite starting materials

The Si/Al ratio is indicated after the underscore. For example, NH₄-fer_11 refers to a ferrierite zeolite in the NH₄⁺ form, having an Si/Al ratio of 11.
- NH₄-ferrierite (ZSM-35), CLA 27736 Shell/ Zeolyst, (NH₄-fer_11)
- H-ZSM-5, PQ Corporation, The Netherlands H-ZSM-5_27, H-ZSM-5_45).
- H-beta, CU Chemie Uetikon AG, Switzerland, (H-beta_13).

### Ion Exchange

Exchange of various zeolites with different metal ions was carried out at 90°C. To obtain Ce-H-zeolite, NH₄⁺-zeolite is partly exchanged with Ce. After drying, the product is subjected to calcination, upon which the non-exchanged NH₄⁺ ions are converted to H⁺ ions, whereby the Ce-H-zeolite is formed.

For ion exchange with Ce, cerium(III) acetate (99.9% Sigma-Aldrich) was used. Furthermore silver nitrate (1.010 M, volumetric standard in water, Sigma Aldrich), tetraamineplatinum(II) hydroxide hydrate (57.68% Pt, Strem Chemicals), copper (II) acetate monohydrate (J.T. Baker) and cobalt acetate tetrahydrate (>99% purum, Fluka Chemica) were used for exchanging the corresponding metals. For exchange with metal ions, samples of approximately 20 g of dried zeolite powder were exchanged in 1 liter of solution. The zeolite was added to the solution of the exchange salt in demineralized water. When exchange was carried out above room temperature, a quartz glass vessel, equipped with a reflux cooler and a temperature controller was used. The zeolite was added to the solution when the exchange temperature of 90°C had been reached. All exchanges were carried out under continuous magnetic stirring.

After the desired interval of exchange, the exchange solution was separated from the zeolite powder with a Büchner funnel. If subsequently the exchange procedure was repeated with a fresh exchange solution, the wet zeolite sample was directly added to the fresh solution.

Some silver exchanged zeolite samples were prepared by treatment with a silver nitrate solution. In the ion exchange preparation, the effects of the molarity of the exchange solution, temperature, interval and of solution refreshment were studied. In literature, the exchange with silver nitrate is generally carried out at room temperature.

For the co-exchange of H-ferrierite and H-beta with cerium and silver, the samples were first treated with cerium acetate at 90°C and subsequently with silver nitrate at room temperature and vice versa. In between the exchanges, small samples were taken for ICP/AAS analysis to monitor the progress of the exchange.

Pt-H-ferrierite was prepared by exchanging 17 g of dried NH₄₋ ferrierite with 1 liter of a 0.035 M solution of Pt(NH₃)₄(OH)₂ in demineralized water for 24 h at room temperature. ICP/AAS elemental analysis provided the platinum content. It is assumed that Pt is only present in the oxidic form (*i*.*e*., PtO₂) and not in the ionic form. Therefore, the Pt content will be expressed in wt% Pt only.

To obtain copper exchanged zeolites, dried H-ferrierite (20 g) was exchanged with a 1 liter of a 0.03 M solution of copper acetate in demineralized water at room temperature. Two samples were prepared, one by a single exchange of 4 h, the other sample by refreshing the exchange solution after 4 h and repeating this procedure for another 4 h.

Preparation of cobalt exchanged zeolites was carried out by exchanging dried H-ferrierite (20 g) with a 1 liter of a 0.03 M solution of cobalt acetate in demineralized water at 80°C. Two samples were prepared, one by a single exchange of 4 h, the other sample by refreshing the exchange solution after 4 h and repeating this procedure for another 4 h.

When the exchange procedure was completed, each sample was washed thoroughly with 5 to 6 liter of demineralized water and dried overnight at 120°C. Subsequently, each sample was calcined at 600°C for 6 h (heating rate 5°C/min) and slowly cooled down to room temperature (cooling rate < 5°C/min).

For catalyst testing, the catalyst powders were pressed to pills, crushed and sieved to the desired size fraction.

### Catalyst characterization

After calcination, the prepared catalysts were analyzed on their elemental Al, Ce, Pt, Cu, and Co content by ICP analysis (Inductively Coupled Plasma Optical Emission Spectroscopy, Perkin Elmer Optima 3000 DV radial) and on their Si content by flame AAS analysis (Atomic Absorption Spectroscopy, Perkin Elmer 2380).

In order to prepare the sample for analysis, 50 mg of the catalyst was dissolved in 50 g of a matrix solution (aqueous solution of 12.5 ml/liter 96 m% sulfuric acid and 10 ml/liter 40 m% HF). The solution was shaken overnight on a shaking machine. Prior to the actual analysis, the prepared solution was diluted with 1.4 M nitric acid (ratio 1:10).

From the analysis results (in mol/liter), the silicon-to-aluminum ratio was determined. The Pt content is only expressed in wt% of the solid sample mass as platinum is assumed not to be present in the ionic form in the zeolite.

### NOx reduction under simulated exhaust gas conditions

Experiments were carried out in a tubular quartz reactor (internal diameter 8 mm) that was surrounded by a heating jacket. The internal reactor temperature was controlled by thermocouples that were inserted in the inlet and in the outlet of the reactor.

Simulated exhaust gas was composed in the feed section of NOx (99 v% NO and 1 v% NO₂), propene, air, water and balance nitrogen. Water was fed to an evaporator by a peristaltic pump and added as steam to the nitrogen feed.

The gas composition was analyzed on its NOx, N₂O and hydrocarbon concentration. The NOx concentration was monitored with a NOx analyzer (Ecophysics CLD 700 EL-ht). The N₂O and hydrocarbon concentrations were measured with gas chromatographs (HP 5890 series II), equipped with an electron capture detector (ECD) and with a flame ionization detector (FID), respectively. The equipment was fully automated.

Unless indicated otherwise, the NOx reduction experiments were carried out using the following conditions:
- Catalyst beds were generally 5 cm in height (particle diameter (dₚ): 500-800 µm). Together with the reactor inner diameter of 8 mm and a gas flow of 2000 ml/min (measured at 0°C and atmospheric pressure), this corresponds to a GHSV of 47 700 h⁻¹. Deviations from these values are mentioned explicitly.
- The simulated exhaust gas was composed of 400 ppmv NOx, 400 ppmv propene, 10 v% of oxygen, 10 v% of steam and balance nitrogen.
- Reactor measurements were carried out for 50 min per setting. The reactor feed concentration was measured in bypass measurements (25 min).

### Example 1

Ce-H-FER_11 with different Ce exchange levels (27, 51 and 75 %) were prepared as described above.

Similarly Ce(87)-H-beta_13, Ce (111)-H-beta_13, Ce(113)-H-ZSM-5_43, and Ce(30)-H-ZSM-5_43 samples were prepared as a reference.

These samples were tested as catalysts in the SCR of NOx as indicated above using the following conditions: 500 ppmv NOx, 500 ppmv propene, 10 v% oxygen, 10 v% water, GHSV 47 700 h⁻¹, 500µm<dₚ<800 µm.

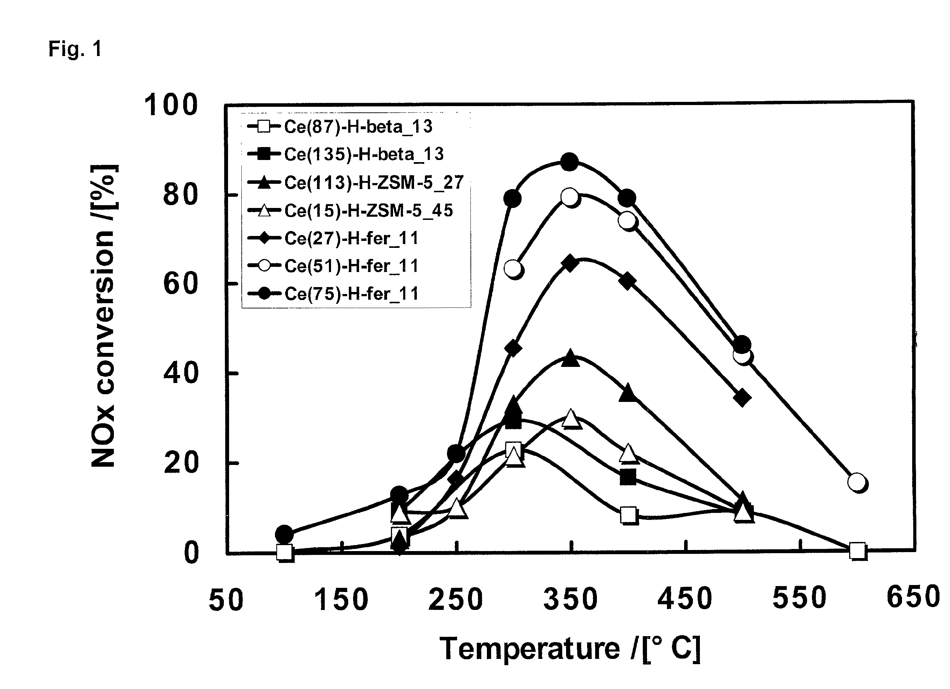

Fig. 1 shows the conversion of NOx in the reduction of NOx with propene *vs*. temperature over these cerium exchanged zeolites. The conversion observed from 275°C and higher, is clearly the highest for the Ce-H-FER samples.

This example illustrates that Ce-H-FER shows an activity in the SCR of NOx, which is considerably higher than the activity of other types of zeolite (BEA, ZSM-5) exchanged with the same metal.

### Example 2

In order to test the influence of the metal ion, tests were performed using FER zeolite exchanged with either Ce or Ag, as well as combinations of Ce and Ag. The following catalysts were prepared:
Ce(75)-H-fer_11,
Ag(28)-H-fer_11 (reference),
Ag(11)-Ce(75)-H-fer_11, and
Ag(29)-Ce(105)-H-fer_11.

These samples were tested as catalysts in the SCR of NOx as indicated above using the following conditions: 500 ppmv NOx, 500 ppmv propene, 10 v% oxygen, 10 v% water, GHSV 47 700 h⁻¹, 500µm<dₚ<800 µm.

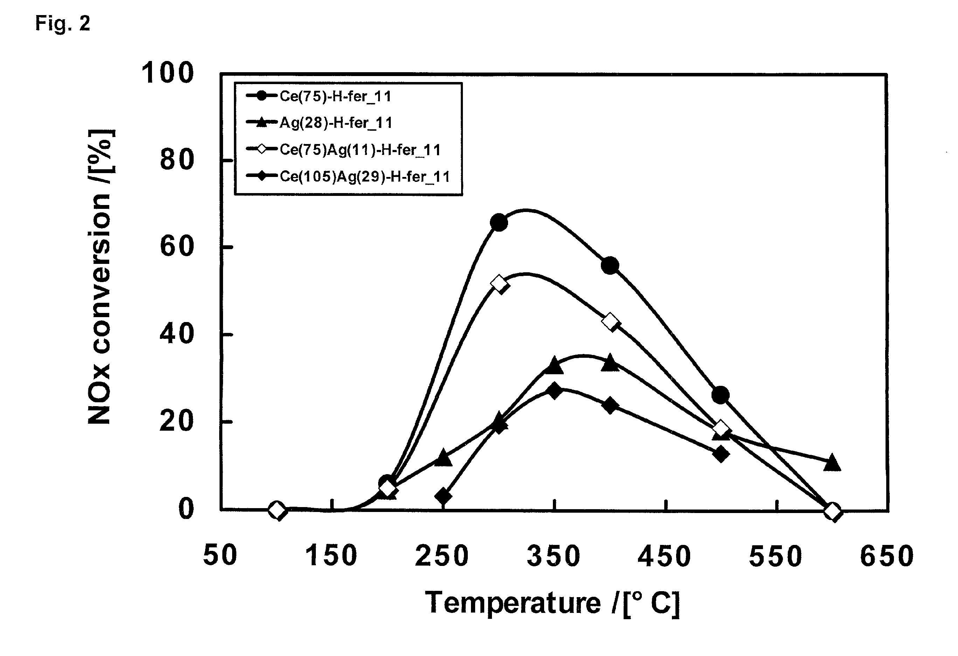

Fig. 2 shows the results of the conversion of NOx in the reduction with propene *vs*. temperature over these co-exchanged Ce-Ag-H-ferrierite and over pure Ag-H-ferrierite and Ce-H-ferrierite.

These results clearly illustrate that Ce-H-FER has the highest activity. The presence of exchanged Ag in the FER zeolite lowers the activity.

### Example 3

This example further investigates the influence of different metal ions. In particular a comparison was made between the activity of Cu, Co, Ag, Pt and Ce exchanged FER zeolites. The following samples were prepared:
Cu(6)-H-fer_11 (reference),
Cu(15)-H-fer_11*(reference),
Co(30)-H-fer_11*(reference),
Co(65)-H-fer_11*(reference),
Pt(0.4wt%)-H-fer_11*(reference),
Ag(28)-H-fer_11(reference),
Ce(27)-H-fer_11,
Ce(51)-H-fer_11,
Ce(75)-H-fer_11.

These samples were tested as catalysts in the SCR of NOx as indicated above using the following specific conditions: 500 NOx (or 400 ppmv for the cases marked * above), 500 ppmv propene (or 400 ppmv for the cases marked *), 10 v% oxygen, 10 v% water, GHSV 47 700 h⁻¹, 500µm<dₚ<800 µm.

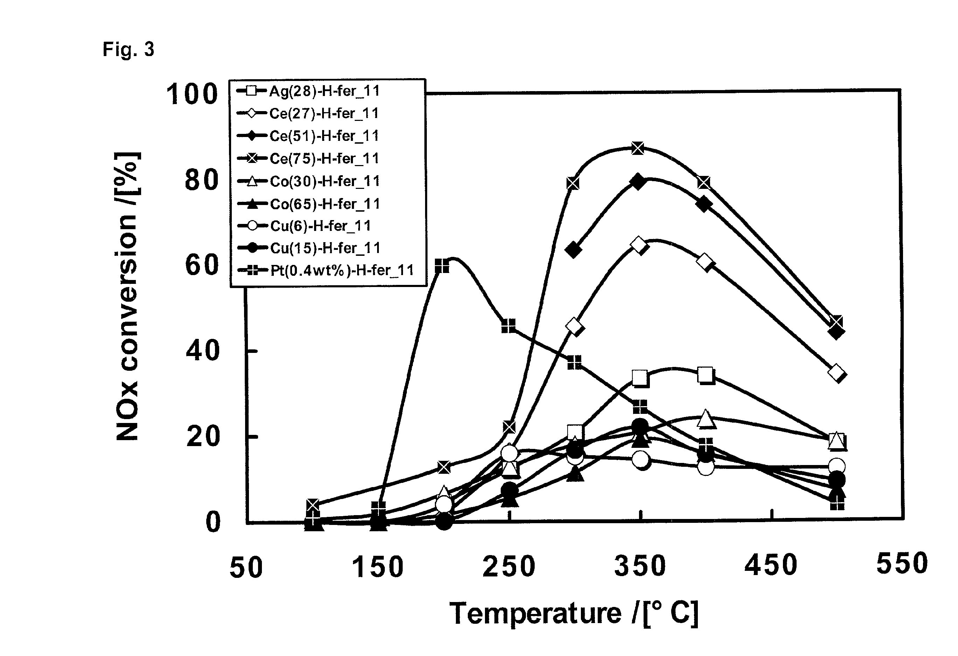

Fig. 3 shows the conversion of NOx in the reduction of NOx with propene *vs.* temperature over these ferrierite samples, exchanged with different metals. Again, the activity of the Ce-H-FER samples is considerably higher than that of the reference samples. This is not affected when the difference in exchange level of the Ce samples compared to that of the samples exchanged with the other metals in taken into account. In other words, the conversion per metal site is still considerably higher for the case of Ce exchanged fer than for the other metal ions.

This example thus illustrates that Ce-H-FER shows an activity in the SCR of NOx, which is considerably higher than the activity of FER zeolite exchanged with Cu, Co, Ag and Pt.

### Example 4

In this example, optimal exchange levels for Ce-H-FER are investigated. Seven samples Ce-H-FER were prepared having different exchange levels of Ce; 12, 19, 31, 93, 111, 139 and 258 %, respectively.

These samples were tested as catalysts in the SCR of NOx as indicated above using the following conditions: 400 ppmv NOx, 400 ppmv C₃H₆, 10 v% O₂, 10 v% H₂O, GHSV 47 700 h⁻¹, Flow 2000 ml/min, bed height: 5 cm, 500µm < dp < 800µm.

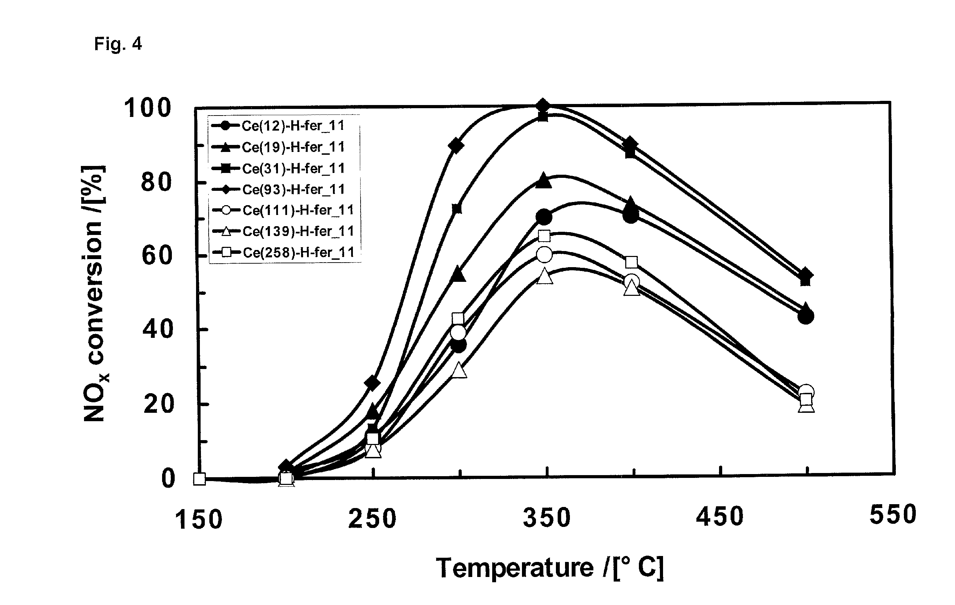

Fig. 4 shows the results for the NOx conversion with propylene over Ce-H-ferrierite catalysts with these various cerium loadings. From these experiments it follows that an optimum value of the exchange level can be found relatively easily.

### Example 5

In this example, the activity of a physical mixture of Ce-H-FER and Pt-H-FER is investigated. Three samples were prepared:
Pt(1wt.%)-H-FER (reference);
50/50 wt% physical mixture of Ce(60)-H-Fer and Pt(1wt%)-H-Fer; and
Ce-63-H-FER.

These samples were tested as catalysts in the SCR of NOx as indicated above using the following conditions: GHSV 47 700 h⁻¹, flow 2000 ml/min, 2 g catalyst, 500 µm <dₚ<800 µm, 10 vol% oxygen, 10 vol% water, 400 ppmv NOx and 400 ppmv of propylene.

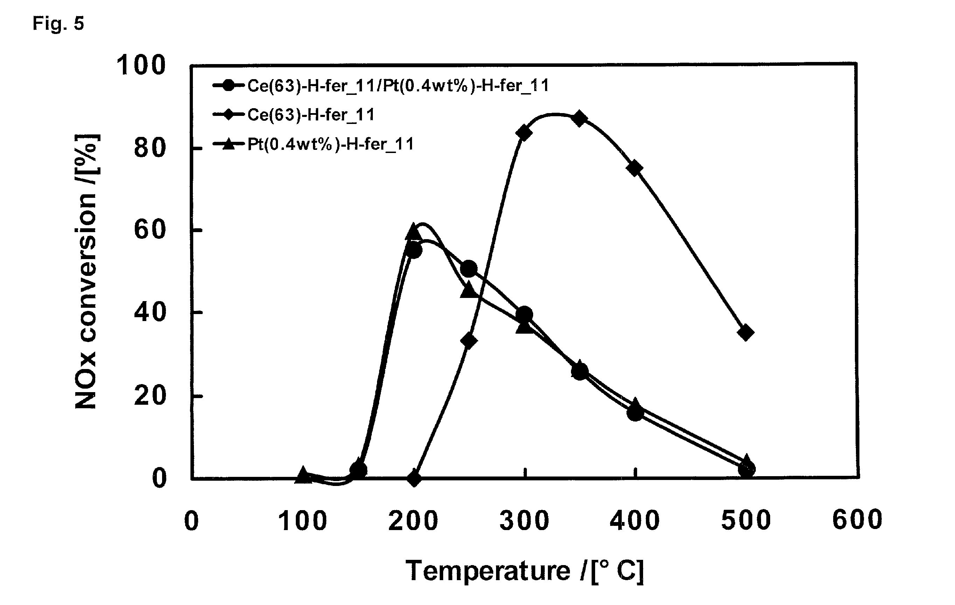

Fig. 5 shows the results of the NOx reduction with propylene *vs.* temperature over these samples. These results illustrate that the temperature window in which a desired conversion of NOx is obtained may be widened by the use of a catalytic system comprising at least two catalyst beds, wherein the first bed comprises a Ce-H-FER catalyst composition, and wherein the second bed comprises a Pt exchanged zeolite.

### Example 6

In this example, the activity of a physical mixture of Ce-H-FER and CeO₂ is investigated. CeO₂ having a BET surface area of 128 m²/g was used in this example, as well as in all other examples described herein. Four samples were prepared, which were each tested as catalysts in the SCR of NOx as indicated above. The following table summarizes some of the experimental conditions.

| Catalyst | Bed height / [cm] | GHSV / [h⁻¹] |
|---|---|---|
| 1 g Ce(93)-H-fer | 2.5 | 95 400 |
| 2 g Ce(93)-H-fer | 5 | 47 700 |
| 2 g CeO₂ (reference) | 5 | 47 700 |
| physical mixture of 2 g 50 wt% Ce(93)-H-fer/ 50 wt% CeO₂ | 5 | 95 400*) |

| | | |
|---|---|---|
| *) GHSV based on volume of Ce-H-fer only. | | |

The remainder of the test conditions were as follows: 400 ppmv NOₓ, 400 ppmv propylene, 10 v% oxygen, 10 v% water and 500 µm<dₚ<800 µm. Total flow was 2000 ml/min.

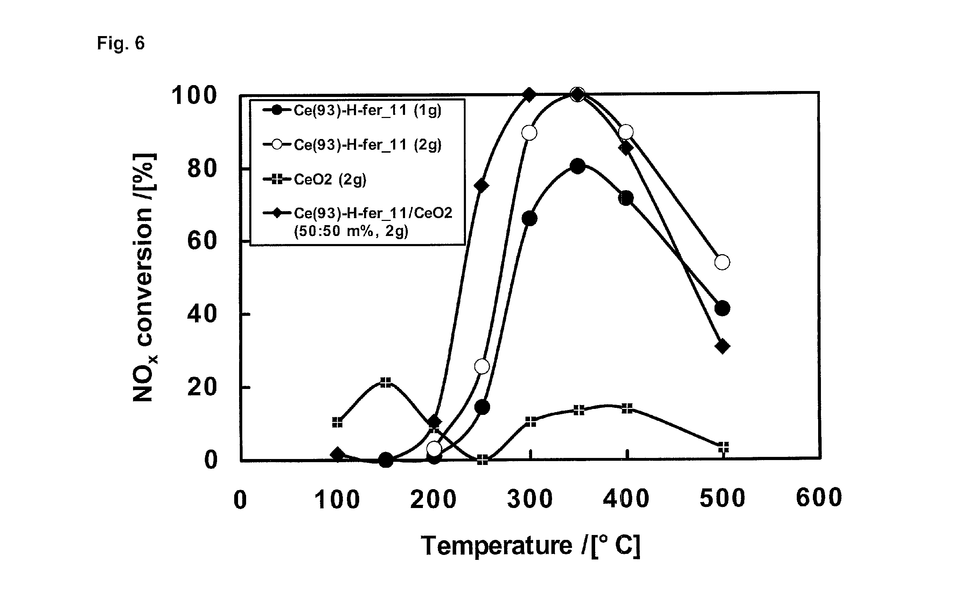

The results of these tests are given in Fig. 6. These results clearly indicate that the activity of the catalyst in the SCR of NOx increase considerably when CeO₂ is added to Ce-H-FER to provide a physical mixture. In particular the temperature window is broadened considerably. This figure furthermore illustrates the synergistic effect of the admixing of CeO₂ and Ce-H-FER; the conversion of CeO₂ alone being very low, whereas the conversion over the bed of 2g 50/50 wt.% mixture is higher over a broader temperature window than that of a bed containing 2 g of Ce-H-FER alone.

### Example 7

In this example, the activity of a physical mixture of Ce-H-FER and CeO₂ is further investigated. In particular the differences in activity between physical mixtures of Ce-H-FER and CeO₂ and the same materials in separate beds were studied, as well as different ratios of Ce-H-FER/CeO₂ in the physical mixtures. The following six samples were tested:

| Sample identification | Amount Ce(72)-H-fer/[g] | Amount CeO₂/[g] | Total bed weight/[g] | Bed height/ [cm] | GHSV /[h⁻¹] |
|---|---|---|---|---|---|
| Ce(72)-H-fer | 2 | | 2 | 5 | 47 700 |
| CeO₂ | | 2 | 2 | 5 | 47 700 |
| (A) | 1 | 1 | 2 | 5 | 95 400*) |
| (B) | 1 | 1.5 | 2.5 | 6.25 | 95 400*) |
| (C) | 1 | 2 | 3 | 7.5 | 95 400*) |
| (D) | 1 | 1 | 2 | 5 | 95 400*) |

| | | | | | |
|---|---|---|---|---|---|
| *) The GHSV is based on the amount of Ce(72)-H-fer for these cases | | | | | |

Samples (A)-(C) were physical mixtures of Ce(72)-H-fer and CeO₂ in the indicated ratios.

Sample (D) refers to two adjacent beds of CeO₂ (top bed, *i.e*., near the reactor inlet) and Ce(72)-H-fer (bottom bed, near the reactor outlet).

These samples were again tested as catalysts in the SCR of NOx as indicated above. The specific conditions were 400 ppmv NOₓ, 400 ppmv propylene, 10 v% oxygen, 10 v% water and 500 µm<dₚ<800 µm. Total flow was 2000 ml/min.

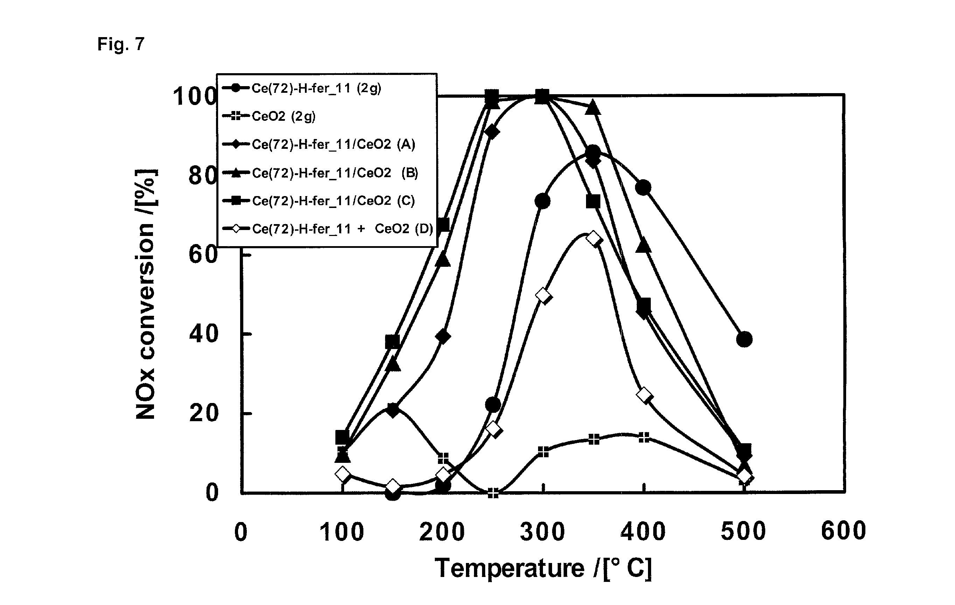

Fig. 7 shows the results in terms of NOₓ conversion *vs*. temperature. These results further illustrate the synergistic effect of the admixing of CeO₂, the conversion of samples (A)-(C) being higher for the largest part of the temperature window. Particularly the conversion for samples (A)-(C) at lower temperatures is improved considerably, which is not derivable from the contribution to the conversion observed for the components CeO₂ and Ce(72)-H-fer themselves.

### Example 8

In this example, the activity of catalysts based on Ce-H-FER for the SCR of NOx in a diesel exhaust gas is investigated. The exhaust gas was produced by a Lister-Petter LPW3 three cylinder water cooled diesel engine.

The test conditions were as follows: engine load 4 kW, GHSV 70 000 h⁻¹, 800-900 ppmv NOₓ, 550-640 ppmv propylene, ∼15.9 v% oxygen, ∼3.1 v% water, 40 ppmv sulfur, balance nitrogen and 800 µm<dₚ<1000 µm.

The fuel used was commercial automotive summer quality diesel with a sulfur content of 0.04 wt%. The engine met EN590:1996 specifications.

To enable manipulation of the combustion air conditions (temperature and humidity), dried air was used to which steam could be added. At the engine exhaust, the main part of the exhaust gas was vented at atmospheric pressure and only a slipstream was used for NOx reduction experiments.

Three catalyst samples were tested at varying temperatures.
(A) Ce(23)-H-fer_11;
(B) 50wt% Ce(23)-H-fer_11 and 50 wt% Pt(0.4wt%)-H-fer_11 in separate beds. Ce(23)-H-fer_11 was in the bed near the reactor inlet, Pt(0.4wt%)-H-fer_11 was near the outlet; and
(C) A 50:50 wt% physical mixture of Ce(23)-H-fer_11 and Pt(0.4wt%)-H-fer_11.

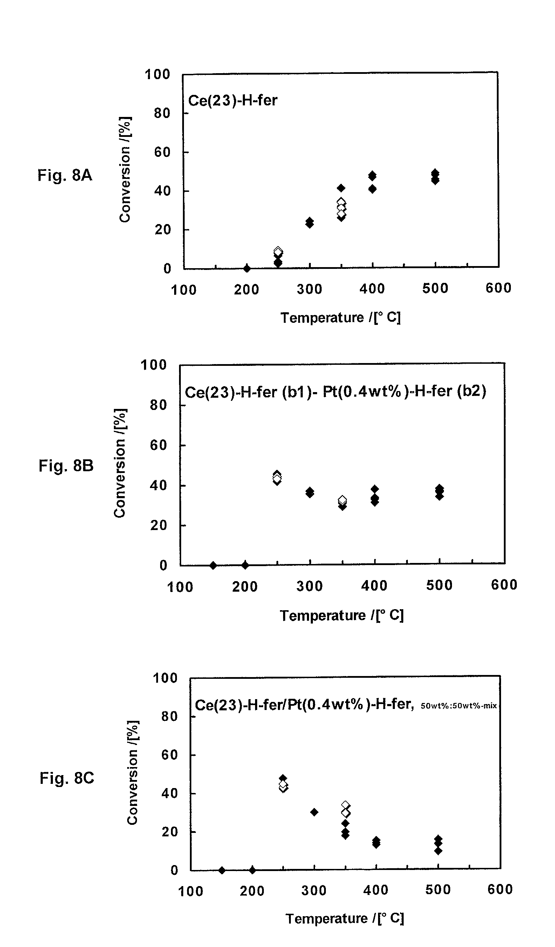

Fig. 8A, 8B and 8C show the results in terms of conversion of NOₓ *vs.* temperature for samples (A), (B) and (C), respectively.

In these figures closed diamonds (◆) indicate the initial NOₓ conversion, and open diamonds (◇) indicate the NOx conversion after 72 h of operation. These results clearly illustrate the ability of the catalysts according to the present invention to convert NOx in SCR under realistic conditions, *i.e.,* in the presence of water and sulfur compounds. The activity is maintained for a prolonged period of time.

From the above Experiments 1-8 the following general observations are made:
i) Ce-H-FER shows an activity in the SCR of NOx in the presence of oxygen and water, which is considerably higher than the activity of FER zeolite exchanged with Cu, Co, Ag and Pt.
ii) Ce-H-FER shows an activity in the SCR of NOx, which is considerably higher than the activity of other types of zeolite (BEA, ZSM-5) exchanged with the same metal.
iii) The catalyst compositions of the invention show a considerable activity under "real" diesel exhaust gas conditions, which include the presence of water and sulfur compounds.
iv) The activity of the catalyst compositions of the invention may further be improved by admixing metal oxide compounds, such as cerium oxide. In particular the activity at lower temperatures is then improved.

## Claims

1. Catalyst composition comprising a zeolite of the ferrierite type (FER), which zeolite is ion exchanged with Ce.

2. Catalyst composition according to claim 1, which comprises Ce-H-FER, preferably Ce-H-ZSM-35.

3. Catalyst composition according to any of the previous claims, wherein the Ce ion exchange level is from 15-98%, preferably from 60-95%.

4. Catalyst composition according to any of the previous claims, which is a physical mixture of said ferrierite and cerium oxide.

5. Catalyst composition according to any of the previous claims, further comprising a zeolite exchanged with Pt.

6. Catalytic system comprising at least two catalyst beds, wherein the first bed comprises a catalyst composition according to any of the previous claims, and wherein the second bed comprises a Pt exchanged zeolite.

7. Process for the reduction of NOx from a stream, which stream further comprises oxygen, comprising a step wherein said stream is contacted in the presence of a reducing agent with a catalyst composition according to any of the claims 1-5, optionally in the catalytic system of claim 6.

8. Process according to claim 7, wherein said stream further comprises water.

9. Process according to claim 7 or 8, which is carried out at a temperature of 150-500°C, preferably at 250-400°C.

10. Process according to claim 7-9, wherein said reducing agent comprises an organic compound, ammonia and/or urea.

11. Process according to claim 10, wherein said organic compound is a hydrocarbon, preferably an alkene, more preferably a C₂-C₂₀ alkene, most preferably propene, optionally substituted with one or more oxygen comprising groups.
